Europäisches Patentamt

European Patent Office

Office européen des brevets

(19)

(11) Veröffentlichungsnummer: **0 168 115**
**B1**

(12) # EUROPÄISCHE PATENTSCHRIFT

(45) Veröffentlichungstag der Patentschrift:
**05.10.88**

(51) Int. Cl.⁴: **G 11 B 15/43**

(21) Anmeldenummer: **85201118.8**

(22) Anmeldetag: **08.07.85**

(54) **Bremsvorrichtung für eine Wickeleinrichtung eines Aufzeichnungs- und/oder Wiedergabegerätes für einen bandförmigen Aufzeichnungsträger.**

(30) Priorität: **13.07.84 AT 2276/84**

(43) Veröffentlichungstag der Anmeldung:
**15.01.86 Patentblatt 86/3**

(45) Bekanntmachung des Hinweises auf die Patenterteilung:
**05.10.88 Patentblatt 88/40**

(84) Benannte Vertragsstaaten:
**DE FR GB**

(56) Entgegenhaltungen:
**DE - A - 2 049 063**
**DE - A - 2 618 544**
**DE - C - 1 119 539**
**GB - A - 1 467 139**
**US - A - 4 042 075**

(73) Patentinhaber: **N.V. Philips' Gloeilampenfabrieken,**
**Groenewoudseweg 1, NL-5621 BA Eindhoven (NL)**

(72) Erfinder: **Huber, Alois, INT. OCTROOIBUREAU B.V. Prof.**
**Holstlaan 6, NL-5656 AA Eindhoven (NL)**
Erfinder: **Hutter, Heinrich, INT. OCTROOIBUREAU B.V.**
**Prof. Holstlaan 6, NL-5656 AA Eindhoven (NL)**

(74) Vertreter: **Schrijnemaekers, Hubert Joannes Maria et al,**
**Internationaal Octrooibureau B.V. Prof. Holstlaan 6,**
**NL-5656 AA Eindhoven (NL)**

## Beschreibung

Die Erfindung betrifft eine Bremsvorrichtung für eine Wickeleinrichtung eines Aufzeichnungs- und/oder Wiedergabegerätes für einen bandförmigen Aufzeichnungträger, bei der an eine mit der Wickeleinrichtung in Verbindung stehende Scheibe umfangsseitig ein eine Bremsfläche aufweisender Bremskörper anlegbar ist, der zur Aufbringung einer je nach der Drehrichtung der Scheibe unterschiedlichen Bremskraft entlang eines konzentrisch zur Scheibe verlaufenden, an einem schwenkbar gelagerten und zum Bremsen mit einer vorgegebenen Kraft beaufschlagbaren Bremshebel vorgesehenen Kurvenabschnittes über einen vorgegebenen Winkelbereich entsprechend den beiden Drehrichtungen frei verstellbar ist, wobei seine beiden Endlagen, in welchen unterschiedliche Bremshebelarmlängen zur Wirkung kommen, durch je einen mit einer Anschlagfläche versehenen Anschlag festgelegt sind. Eine derartige Bremsvorrichtung ist aus der DE-A 2 049 063 bekannt. Bei dieser bekannten Bremsvorrichtung gelangt als Bremskörper ein Bremsklotz zur Anwendung, dessen Bremsfläche konzentrisch zum Umfang der abzubremsenden Scheibe verläuft. Am Bremshebel ist ein sektorförmiger konzentrisch zur Scheibe verlaufender Schlitz vorgesehen, in den ein am Bremsklotz vorgesehener Achsstummel hineinragt, wodurch der Bremsklotz entsprechend den beiden Drehrichtungen entlang des Schlitzes frei verstellbar ist, wobei die beiden Enden des Schlitzes Anschläge bilden, welche zwei Endlagen für den Bremsklotz festlegen. Wird der Bremsklotz durch Verschwenken des Bremshebels an den Umfang der Scheibe angelegt, so wird er je nach der Drehrichtung der Scheibe in eine der beiden Endlagen verstellt, in der er dann die Scheibe abbremst. Je nach der Endlage, in welcher sich der Bremsklotz befindet, kommen dabei unterschiedliche Bremshebelarmlängen zur Wirkung, so dass die Scheibe je nach ihrer Drehrichtung mit unterschiedlicher Bremskraft abgebremst wird, wie dies bei Aufzeichnungs- und/oder Wiedergabegeräten wünschenswert ist, da eine Wickeleinrichtung, wenn von ihr abgewickelt wird, stärker gebremst werden soll, als wenn auf sie aufgewikelt wird, damit der zwischen zwei Wickeleinrichtungen verlaufende Aufzeichnungträger im Stillstand stets gespannt ist.

Die Erfindung hat sich zum Ziel gesetzt, eine Bremsvorrichtung der eingangs angeführten Gattung hinsichtlich ihrer Wirkungsweise weiter zu verbessern. Erfindungsgemäss ist hierzu vorgesehen, dass der Bremskörper als Bremsrolle ausgebildet ist, dass die Anschläge geräteseitig feststehend angeordnet sind und dass die Bremsrolle in den beiden Endlagen mit ihrer Bremsfläche an der Anschlagfläche des betreffenden Anschlages anliegt. Auf diese Weise wird durch das Zusammenwirken der Bremsrolle mit dem betreffenden feststehenden Anschlag erreicht, dass eine Verstärkung beziehungsweise gegebenenfalls eine Abschwächung der Bremskraft eintritt. Somit kann die für das Abbremsen massgebende Bremskraft auf einfache Weise beeinflusst werden, wobei im Falle einer Verstärkung der Bremskraft auf den Bremshebel dann nur eine geringere Kraft aufgebracht werden muss, um die Wickeleinrichtung einwandfrei abzubremsen. Dadurch, dass die Anschläge geräteseitig angeordnet sind, wird der weitere Vorteil erhalten, dass die beim Bremsvorgang von der Bremsrolle auf den betreffenden Anschlag ausgeübte Kraft vom Gerätechassis aufgenommen wird und daher nicht auf den Bremshebel zurückwirkt. Es sei an dieser Stelle erwähnt, dass es an sich bekannt ist, bei einer Bremsvorrichtung für eine Wickeleinrichtung den Bremskörper als Bremsrolle auszubilden, wie dies beispielsweise die DE-C 1 119 539 zeigt. Hierbei ist aber die Bremsrolle nur einfach drehbar auf einem Bremshebel angeordnet, und die Bremswirkung kommt dadurch zustande, dass die Bremsrolle selbst gebremst ist, beispielsweise durch die Lagerreibung oder eine zusätzliche Bremse, beziehungsweise beim Bremsvorgang eine Keilwirkung eintritt. Demgegenüber wird bei einer erfindungsgemässen Bremsvorrichtung das Zusammenwirken einer am Bremshebel frei verstellbaren Bremsrolle mit einem von zwei geräteseitigen Anschlägen zur Beeinflussung der Bremskräfte ausgenützt.

Üblicherweise ist die Anschlagfläche eines Anschlages quer zur Verstellrichtung desjenigen Teiles orientiert, dessen Verstellweg sie begrenzen soll, damit seine Endlage exakt definiert ist. Im vorliegenden Fall ist dann die Anschlagfläche so zum Umfang der abzubremsenden Scheibe ausgerichtet, dass die Tangentialebene im Berührungspunkt der Bremsrollenfläche an der Anschlagfläche mit der Tangentialebene im Berührungspunkt der Bremsrollenfläche am Umfang der Scheibe einen Winkel von 90° einschliesst. Bei einer solchen Orientierung der Anschlagfläche ergibt sich ein Verstärkungsfaktor für die Bremskraft, dessen Grösse vom Reibungskoeffizienten der Bremsfläche der Bremsrolle abhängig ist. Als vorteilhaft hat sich nun erwiesen, wenn bei mindestens einem Anschlag die Tangentialebene im Berührungspunkt der Bremsrollenfläche an der Anschlagfläche mit der Tangentialebene im Berührungspunkt der Bremsrollenfläche am Umfang der Scheibe einen von 90° abweichenden Winkel einschliesst. Auf diese Weise ist es einfach möglich, den Verstärkungsfaktor in weiten Grenzen zu variieren. Wird dieser Winkel grösser als 90° gewählt, so erhält man einen kleineren Verstärkungsfaktor für die Bremskraft gegenüber dem Verstärkungsfaktor bei einem Winkel von 90°, wobei der Verstärkungsfaktor auch kleiner als 1 werden kann, was bedeutet, dass dann eine Abschwächung der Bremskraft eintritt. Wird hingegen der Winkel kleiner als 90° gewählt, so erhält man einen noch grösseren Verstärkungsfaktor gegenüber demjenigen bei einem Winkel von 90°.

Als vorteilhaft hat sich erwiesen, wenn bei dem Anschlag, welcher die Endlage für die Bremsrolle festlegt, in der die längere Bremshebelarmlänge zur Wirkung kommt, die Tangentialebene im Berührungspunkt der Bremsrollenfläche an der Anschlagfläche mit der Tangentialebene im Berührungspunkt der Bremsrollenfläche am Umfang der Scheibe einen stumpfen Winkel einschliesst. Hierdurch ist erreicht, dass in der Drehrichtung der abzubremsenden Scheibe, in der sie weniger stark gebremst werden soll, zusätzlich zu der Wirkung des längeren Hebelarmes, der Verstärkungsfaktor für die Bremskraft geringer ist, als noch schwächer gebremst wird.

Als zweckmässig hat sich hierbei erwiesen, wenn der stumpfe Winkel in der Grössenordnung von 120° gewählt ist. In Abhängigkeit der Grösse des Reibungskoeffizienten der Bremsfläche der Bremsrolle ergibt sich dabei ein Verstärkungsfaktor in der Grössenordnung von 1, der dabei etwas grösser oder etwas kleiner als 1 sein kann. Dies bedeutet, dass in diesem Fall die Bremskraft praktisch nicht beziehungsweise nur gering verstärkt oder etwas abgeschwächt wird.

Weiter hat sich als vorteilhaft erwiesen, wenn bei dem Anschlag, welcher die Endlage für die Bremsrolle festlegt, in der die kürzere Bremshebelarmlänge zur Wirkung kommt, die Tangentialebene im Berührungspunkt der Bremsrollenfläche an der Anschlagfläche mit der Tangentialebene im Berührungspunkt der Bremsrollenfläche am Umfang der Scheibe einen spitzen Winkel einschliesst. Auf diese Weise ist erreicht, dass in der Drehrichtung der Scheibe, in der sie stärker abgebremst werden soll, zusätzlich zu der Wirkung der kürzeren Bremshebelarmlänge der Verstärkungsfaktor für die Bremskraft relativ gross ist, also noch stärker gebremst wird. In Abhängigkeit der Grösse des Reibungskoeffizienten der Bremsfläche der Bremsrolle ergibt sich dabei bei abnehmender Winkelgrösse, zufolge der auftretenden Keilwirkung, ein sehr rascher Anstieg des Betrages des Verstärkungsfaktors.

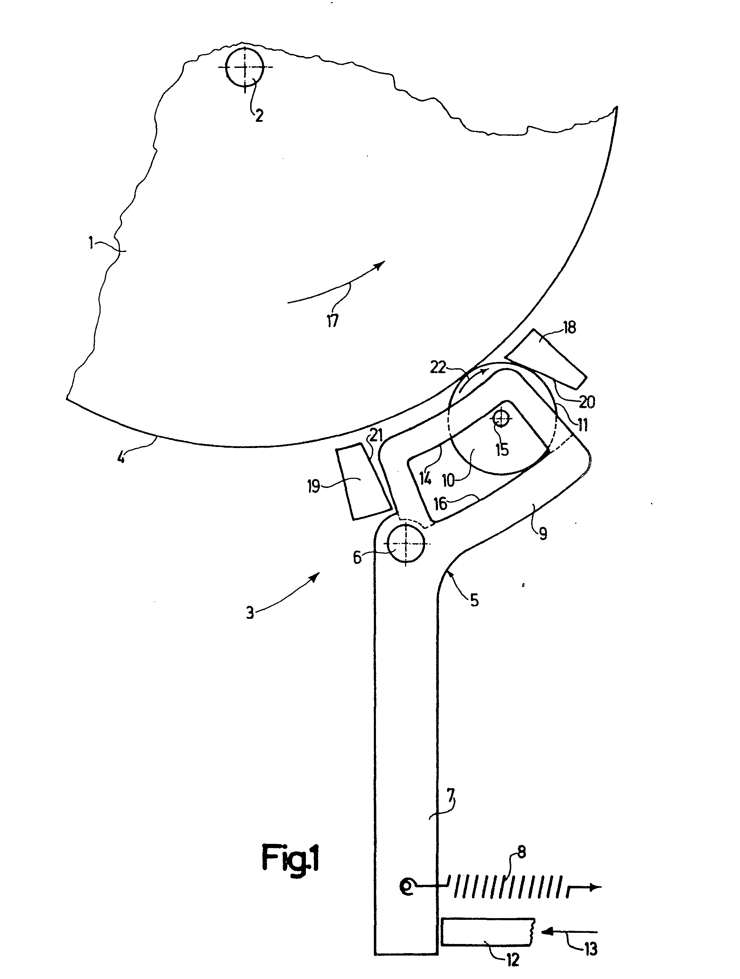

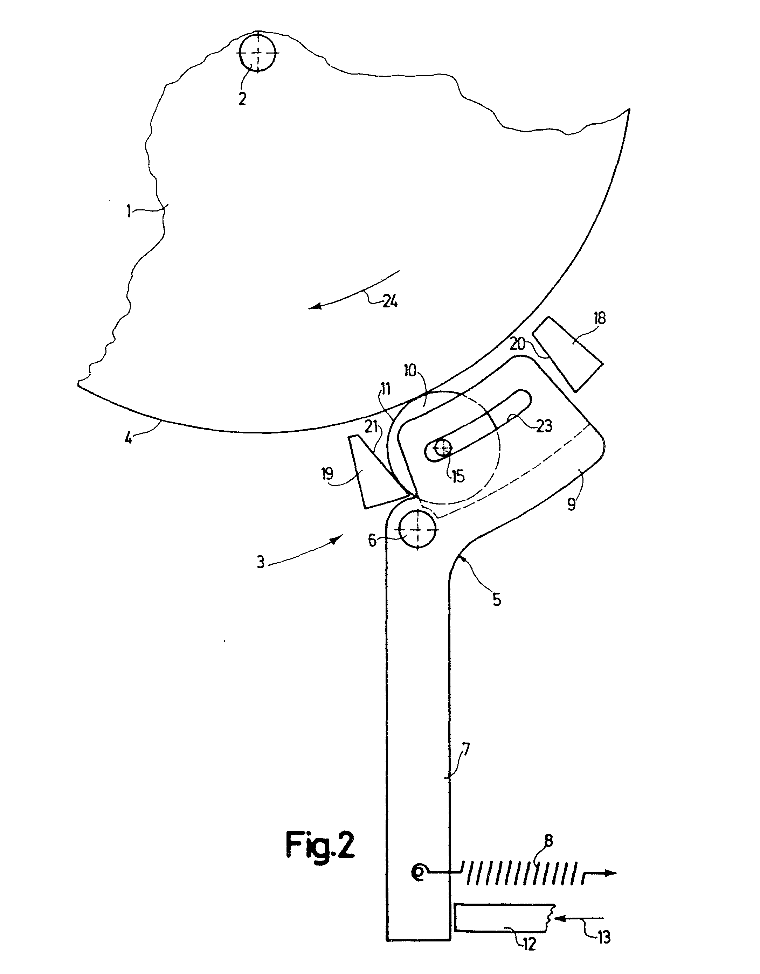

Die Erfindung wird im folgenden anhand der Zeichnungen, in welchen zwei Ausführungsbeispiele der Erfindung dargestellt sind, auf die sie jedoch nicht beschränkt sein soll, näher erläutert. Fig. 1 zeigt eine Bremsvorrichtung, bei der die Bremsrolle für die abzubremsende Scheibe in deren Drehrichtung, in der sie weniger stark gebremst werden soll, mit einem Anschlag zusammenwirkt, dessen Anschlagfläche so orientiert ist, dass der Verstärkungsfaktor für die Bremskraft gegenüber der anderen Drehrichtung der Scheibe geringer ist. Fig. 2 zeigt eine Bremsvorrichtung, bei der die Bremsrolle für die abzubremsenden Scheibe in deren Drehrichtung, in der sie stärker abgebremst werden soll, mit einem Anschlag zusammenwirkt, dessen Anschlagfläche so orientiert ist, dass der Verstärkungsfaktor für die Bremskraft relativ gross ist.

In Fig. 1 ist, mit 1 eine Scheibe bezeichnet, die auf nicht näher dargestellte Art und Weise mit einer Wickeleinrichtung eines Aufzeichnungs- und/oder Wiedergabegerätes für einen bandförmigen Aufzeichnungsträger in Verbindung steht, beispielsweise dadurch, dass auf ihre Achse 2 ein Wickeldorn oder ein Wickelteller aufgesetzt ist. Selbstverständlich könnte die Scheibe zusammen mit einem Wickldorn oder einem Wickelteller auch als eine Baueinheit ausgebildet sein. Zum Stillsetzen einer solchen Wickeleinrichtung dient eine Bremsvorrichtung 3, die mit dem Umfang 4 der Scheibe 1 zusammenwirkt. Hierbei besteht die bekannte Anforderung, dass die Wickeleinrichtung in der Drehrichtung, in der von ihr abgewickelt wird, stärker gebremst wird als in der Drehrichtung, in der mit ihr aufgewickelt wird. Die Bremseinrichtung 3 weist einen Bremshebel 5 auf, der um eine Achse 6 schwenkbar gelagert ist. An seinem einen Hebelarm 7 greift eine Zugfeder 8 an, welche die erforderliche Bremskraft liefert. Am anderen Hebelarm 9 ist als Bremskörper eine Bremsrolle 10 angeordnet, deren Umfangsfläche die Bremsfläche 11 bildet, die mit dem Umfang 4 der Scheibe 1 zusammenwirkt. In Fig. 1 ist die Bremsvorrichtung 3 im Eingriff dargestellt. Zum Lösen der Bremse wird mit einem Gestänge 12 in der Pfeilrichtung 13 auf den Hebelarm 7 gedrückt, wodurch der Bremshebel 5 im Uhrzeigersinn verschwenkt und die Bremsrolle 10 vom Umfang 4 der Scheibe 1 abgehoben wird.

Zur Anordnung der Bremsrolle 10 am Hebelarm 9 ist dieser in Richtung zur Scheibe 1 hin als U-förmiger Teil ausgebildet, wobei die Bremsrolle 10 zwischen den beiden Schenkeln des U-förmigen Teiles liegt, in welchen je eine Ausnehmung 14 vorgesehen ist, in die seitlich an der Bremsrolle 10 vorgesehene Achsstummel 15 hineinragen. Die Bodenfläche des Steges des U-förmigen Teiles ist als zur Scheibe 1 konzentrischer Kurvenabschnitt 16 ausgebildet, so dass die Bremsrolle 10 mit ihrer Bremsfläche 11 an ihm abrollen kann. In der Wirklage der Bremsvorrichtung 3 wird die Bremsrolle 10 von diesem Kurvenabschnitt 16 gegen den Umfang 4 der Scheibe 1 gedrückt, wobei die Achsstummel 15 der Bremsrolle 10 von den Umrandungen der Ausnehmungen 14 freigestellt sind. Die Länge der Ausnehmungen 14 und des Kurvenabschnittes 16 ist so gewählt, dass die Bremsrolle 10 je nach der Drehrichtung der Scheibe 1, gegenüber der Achse 6 des Bremshebels 5, zwei Endlagen einnehmen kann, in welchen sich dann unterschiedliche Bremshebelarmlängen und damit unterschiedliche Bremskräfte ergeben. In der in Fig. 1 dargestellten Endlage der Bremsrolle 10, die sie bei einer durch den Pfeil 17 angegebenen Drehrichtung der Scheibe 1 einnimmt, liegt wie ersichtlich die längere Bremshebelarmlänge und damit eine geringere Bremskraft vor. In der zum Pfeil 17 entgegengesetzten Drehrichtung der Scheibe 1 rollt die Bremsrolle 10 vorerst am Kurvenabschnitt 16 ab, bis sie ihre andere Endlage erreicht, in der sie näher zur Achse 6 des Bremshebels 5 liegt, wodurch dann eine kürzere Bremshebelarmlänge und damit eine stärkere Bremskraft gegeben ist. Der Winkelbereich innerhalb dessen die Bremsrolle 10 zwischen ihren beiden Endlagen verstellbar ist, bestimmt somit das Verhältnis zwischen der längeren und der kürzeren Bremshebelarmlänge, wodurch sich die vom Bremshebel 5 her zur Wirkung kommenden unterschiedlichen Bremskräfte bei den beiden Drehrichtungen der Scheibe 1 ergeben.

Zur Festlegung dieser beiden Endlagen der Bremsrolle 10 sind nun zwei geräteseitig feststehende Anschläge 18 und 19 vorgesehen, die je eine Anschlagfläche 20 bzw. 21 aufweisen, an denen die Bremsrolle 10 mit ihrer Bremsfläche 11 zur Anlage kommt. In diesen Endlagen steht somit die Bremsfläche 11 der Bremsrolle 10 mit dem Kurvenabschnitt 16 am Bremshebelarm 9, einer der beiden Anschlagflächen 20 bzw. 21 am betreffenden Anschlag 18 bzw. 19 und der Umfangsfläche 4 der Scheibe 1 in Wirkverbindung.

Beim Bremsvorgang wird vom Umfang 4 der Scheibe 1 im Berührungspunkt mit der Bremsfläche 11 der Bremsrolle 10 auf diese eine Tangentialkraft ausgeübt, die bei einer Drehrichtung der Scheibe 1 gemäss dem Pfeil 17 bestrebt ist, die Bremsrolle 10 in der Richtung des Pfeiles 22 zu drehen und die Bremsfläche 11 der Bremsrolle 10 an die Anschlagsfläche 20 des Anschlages 18 anzudrücken. Auf diese Weise wird zwischen der Bremsfläche 11 der Bremsrolle 10 und der Anschlagfläche 20 des Anschlages 18 eine Reibungskraft aufgebaut, die zur Scheibe 1 hin gerichtet ist und die somit die vom Bremshebel 5 gelieferte Bremskraft unterstützt, so dass eine stärkere Bremswirkung eintritt. Dadurch, dass die beim Bremsvorgang von der Bremsrolle 10 auf den betreffenden geräteseitig angeordneten Anschlag 18 bzw. 19 ausgeübte Kraft vom Gerätechassis aufgenommen wird, ist weiters erreicht, dass keine Rückwirkung auf den Bremshebel 5 eintritt.

Der Faktor, um den die zusätzliche Bremskraft die vom Bremshebel gelieferte Bremskraft vergrössert, hängt vom Reibungskoeffizienten der Bremsfläche 11 der Bremsrolle 10 und von der Orientierung der Anschlagfläche 20 bzw. 21 des betreffenden Anschlages 18 bzw. 19 ab, demnach vom Winkel, den die Tangentialebene im Berührungspunkt der Bremsrollenfläche 11 an der Anschlagfläche mit der Tangentialebene im Berührungspunkt der Bremsrollenfläche am Umfang der Scheibe bildet. Schliessen diese beiden Tangentialebenen einen Winkel von 90° ein, wie dies beim Anschlag 19 der Fall ist, so ergibt sich bei einem Reibungskoeffizienten von 0,7, wie er mit verschiedenen Kunststoffarten erreicht wird, ein Verstärkungsfaktor von etwa 3. Dies bedeutet, dass in der zum Pfeil 17 entgegengesetzten Drehrichtung der Scheibe 1, wobei sich dann die Bremsrolle 10 in ihrer anderen Endlage befindet und mit der Anschlagfläche 21 des Anschlages 19 zusammenwirkt, eine dreifache Verstärkung der durch die kurze Bremshebelarmlänge bewirkten Bremskraft erreicht wird. Je grösser der Reibungskoeffizient ist, um so grösser ist auch dieser Verstärkungsfaktor.

Schliessen die beiden vorgenannten Tangentialebenen einen stumpfen Winkel ein, wie dies beim Anschlag 18 der Fall ist, so ergibt sich ein kleinerer Verstärkungsfaktor für die Bremskraft, weil diese nur von einer Teilkomponente der entstehenden Reibungskraft unterstützt wird. Ausserdem tritt dadurch, dass sie die Bremsrolle 10 in Richtung des Pfeiles 22 zu drehen bestrebt ist, der Effekt ein, dass die Bremsrolle 10 in Richtung von der Scheibe 1 weg auf die Anschlagfläche 20 auflaufen möchte, was einer Verringerung der Bremskraft gleichkommt und um so mehr begünstigt wird, je grösser der stumpfe Winkel zwischen den beiden Tangentialebenen ist. Damit kann sogar erreicht werden, dass der Verstärkungsfaktor kleiner als 1 wird, also eine Abschwächung der Bremskraft eintritt, was durchaus erwünscht sein kann, da ja in der Drehrichtung des Pfeiles 17 die Scheibe 1 weniger stark gebremst werden soll. Wird beispielsweise der vorgenannte Winkel mit 120° gewählt, so ergibt sich wieder bei einem Reibungskoeffizienten von 0,7 ein Verstärkungsfaktor von etwa 1, so dass nur die entsprechend der längeren Bremshebelarmlänge vom Bremshebel 5 bewirkte Bremskraft zur Wirkung kommt, wie dies beim vorliegenden Ausführungsbeispiel der Fall ist. Schliessen hingegen die beiden Tangentialebenen einen spitzen Winkel ein, so wird gegenüber der 90° Lage der beiden Tangentialebenen der Verstärkungsfaktor für die Bremskraft noch weiter vergrössert, dies auf Grund der eintretenden Keilwirkung, welche an einer derart orientierten Anschlagfläche eine noch grössere Reibungskraft entstehen lässt. Diese Keilwirkung lässt bei gegenüber 90° abnehmenden Winkel den Verstärkungsfaktor sehr rasch ansteigen, was so weit gehen kann, dass die Bremse blockiert. Ein solches Blockieren sollte natürlich vermieden werden, weil dabei eine starke, lokal begrenzte Abnützung der Bremsrolle eintritt. Wie ersichtlich, sind durch die erfindungsgemässen Massnahmen die Bremseigenschaften einer solchen Bremsvorrichtung weitgehend beeinflussbar bzw. wählbar. Um diese Variationsmöglichkeiten noch zu vergrössern, können die Anschläge auch bezüglich der Neigung ihrer Anschlagfläche einstellbar bzw. justierbar ausgebildet werden.

Erwähnt sei noch, dass beim vorliegenden Ausführungsbeispiel auch im Berührungspunkt der Bremsfläche 11 der Bremsrolle 10 mit dem Kurvenabschnitt 16 am Hebelarm 9 eine Reibungskraft aufgebaut wird bzw. von der Bremsrolle 10 eine Kraft auf diesen Hebelarm 9 ausgeübt wird. Diese Reibungskraft ist dabei so gerichtet, dass sie das Andrücken der Bremsrolle 10 an die Anschlagfläche 20 bzw. 21 des betreffenden Anschlages 18 bzw. 19 begünstigt und damit zur Bremskraftverstärkung beiträgt. Hinsichtlich der von der Bremsrolle 10 auf den Hebelarm 9 ausgeübten Kraft ist zu bemerken, dass für beide Endlagen der Bremsrolle 10 die Lage des Kurvenabschnittes 16 am Bremsarm 9 gegenüber der Schwenkachse 6 des Bremshebels 5 so gewählt ist, dass diese Kraft etwa durch die Schwenkachse 6 hindurchgeht, wodurch eine weitgehende Rückwirkungsfreiheit auf den Bremshebel 5 erreicht ist.

Beim Ausführungsbeispiel nach Fig. 2 sind die seitlichen Achsstummel 15 der Bremsrolle 10 unmittelbar in Schlitzen 23 geführt, die in den beiden Schenkeln des wieder als U-förmiger Teil ausgebildeten Hebelarmes 9 vorgesehen sind. Diese Schlitze 23 sind konzentrisch zur Scheibe 1 ausgebildet, so dass sie Kurvenabschnitte bilden, entlang denen die Achsstummel 15 beim Anliegen der Bremsrolle 10 am Umfang 4 der Scheibe 1 frei verstellbar sind, wodurch die Bremsrolle 10 wieder je nach der Drehrichtung der Scheibe 1 zwei Endlagen einnehmen kann, in welchen ihre Bremsfläche 11 an der Anschlagfläche 20 bzw. 21 des betreffenden Anschlages 18 bzw. 19 anliegt und mit dieser zusammenwirkt. Die Übertragung der Bremskraft vom Bremshebel 5 auf die Bremsrolle 10 erfolgt hier durch das Zusammenwirken der Schlitze 23 mit den Achsstummeln 15 der Bremsrollen 10, wobei in den beiden Endlagen der Bremsrolle 10, in welchen wieder unterschiedliche Bremshebelarmlängen zur Wirkung kommen, ihre Achsstummel 15 von den Enden der Schlitze 23 freigestellt sind, so dass diese Endlagen nur durch die Anschläge 18 bzw. 19 festgelegt sind. In Fig. 2 ist diejenige Lage der Bremsrolle 10 eingezeichnet, die sie einnimmt, wenn die Scheibe 1 sich in der durch den Pfeil 24 angegebenen Richtung dreht, in welcher sie stärker abgebremst werden soll und in der die kürzere Bremshebelarmlänge wirksam ist und damit eine grössere Bremskraft zur Wirkung kommt.

Bei diesem Ausführungsbeispiel ist die Anschlagfläche 21 des Anschlages 19 so orientiert, dass die Tangentialebene im Berührungspunkt der Bremsrollenfläche 11 an der Anschlagfläche 21 mit der Tangentialebene im Berührungspunkt der Bremsrollenfläche 11 am Umfang 4 der Scheibe 1 einen spitzen Winkel bildet, der hier mit 75° gewählt ist. Wie bereits erwähnt, wird dadurch erreicht, dass der Verstärkungsfaktor für die Bremskraft grösser ist als bei einer Orientierung der Anschlagfläche, bei der die beiden vorgenannten Tangentialebenen einen Winkel vom 90° einschliessen. Im vorliegenden Fall wird bei einem Reibungskoeffizienten von 0,7 ein Verstärkungsfaktor von etwa 11 und somit eine relativ grosse Bremskraftverstärkung erreicht.

Beim Anschlag 18, der bei einer zum Pfeil 24 entgegengesetzten Drehrichtung der Scheibe wirksam ist, ist dessen Anschlagfläche 20 hier so orientiert, dass die beiden vorgenannten Tangentialebenen einen Winkel von 90° einschliessen, wodurch auch für diese Drehrichtung der Scheibe 1 eine Bremskraftverstärkung eintritt, und zwar eine etwa dreifache. Da somit bei diesem Ausführungsbeispiel in beiden Drehrichtungen der Scheibe 1 eine Bremskraftverstärkung erfolgt, kann die vom Bremshebel 5 aufzubringende Bremskraft relativ klein sein.

Wie aus dem Vorstehenden ersichtlich ist, bestehen eine Reihe von Abwandlungen der beschriebenen Ausführungsbeispiele. Dies gilt insbesondere hinsichtlich der Wahl der Orientierung der Anschlagflächen der beiden Anschläge und des gewählten Reibungskoeffizienten der Bremsfläche der Bremsrolle, wodurch auf einfache Weise der Verstärkungsfaktor für die Bremskraft in beiden Drehrichtungen der Scheibe entsprechend den gestellten Anforderungen gewählt werden kann. Selbstverständlich kann auch für beide Wickeleinrichtungen eines Aufzeichnungs- und/oder Wiedergabegerätes eine derartige Bremsvorrichtung vorgesehen werden.

**Patentansprüche**

1. Bremsvorrichtung für eine Wickeleinrichtung eines Aufzeichnungs- und/oder Wiedergabegerätes für einen bandförmigen Aufzeichnungsträger, bei der an eine mit der Wickeleinrichtung in Verbindung stehende Scheibe (1) umfangsseitig ein eine Bremsfläche (11) aufweisender Bremskörper anlegbar ist, der zur Aufbringung einer je nach der Drehrichtung der Scheibe (1) unterschiedlichen Bremskraft entlang eines konzentrisch zur Scheibe (1) verlaufenden, an einem schwenkbar gelagerten und zum Bremsen mit einer vorgegebenen Kraft beaufschlagbaren Bremshebel (5) vorgesehenen Kurvenabschnittes (16) über einen vorgegebenen Winkelbereich entsprechend den beiden Drehrichtungen frei verstellbar ist, wobei seine beiden Endlagen, in welchen unterschiedliche Bremshebelarmlängen zur Wirkung kommen, durch je einen mit einer Anschlagfläche (20, 21) versehenen Anschlag (18, 19) festgelegt sind, dadurch gekennzeichnet, dass der Bremskörper als Bremsrolle (10) ausgebildet ist, dass die Anschläge (18, 19) geräteseitig feststehend angeordnet sind und dass die Bremsrolle (10) in den beiden Endlagen mit ihrer Bremsfläche (11) an der Anschlagfläche (20, 21) der betreffenden Anschläger (18, 19) anliegt.

2. Bremsvorrichtung nach Anspruch 1, dadurch gekennzeichnet, dass bei mindestens einem Anschlag (18, 19) die Tangentialebene im Berührungspunkt der Bremsrollenfläche an der Anschlagfläche (20, 21) mit der Tangentialebene im Berührungspunkt der Bremsrollenfläche am Umfang der Scheibe (1) einen von 90° abweichenden Winkel einschliesst.

3. Bremsvorrichtung nach Anspruch 2, dadurch gekennzeichnet, dass bei dem Anschlag (18), welcher die Endlage für die Bremsrolle (10) festlegt, in der die längere Bremshebelarmlänge zur Wirkung kommt, die Tangentialebene im Berührungspunkt der Bremsrollenfläche an der Anschlagfläche (20) mit der Tangentialebene im Berührungspunkt der Bremsrollenfläche am Umfang der Scheibe (1) einen stumpfen Winkel einschliesst.

4. Bremsvorrichtung nach Anspruch 3, dadurch gekennzeichnet, dass der stumpfe Winkel in der Grössenordnung von 120° gewählt ist.

5. Bremsvorrichtung nach Anspruch 2, dadurch gekennzeichnet, dass bei dem Anschlag (19), welcher die Endlage für die Bremsrolle (10) festlegt, in der die kürzere Bremshebelarmlänge zur Wirkung kommt, die Tangentialebene im Berührungspunkt der Bremsrollenfläche an der Anschlagfläche (21) mit der Tangentialebene im Berührungspunkt der Bremsrollenfläche am Umfang der Scheibe (1) einen spitzen Winkel einschliesst.

## Claims

1. A braking mechanism for a winding device of a recording and/or reproducing apparatus for a record-carrier tape, in which a braking member having a braking surface (11) can be applied to the circumferential surface of a disc (1) which is connected to the winding device and, in order to obtain a braking force which differs depending on the direction of rotation of the disc (1), said braking member is freely movable through an angle corresponding to the two directions of rotation along an arcuate surface (16) which is concentric with the disc (1) and which is provided on a pivotally mounted braking lever (5) to which a predetermined force can be applied for the purpose of braking, the two end positions of the brake member, in which the braking lever operates with different arm lengths, each being defined by a stop (18, 19) comprising a stop surface (20, 21), characterized in that the braking member is constructed as a braking roller (10), in that the stops (18, 19) are fixedly arranged on the apparatus, and in that in the two end positions the braking surface (11) of the braking roller (10) is positioned against the stop surface (20, 21) of the relevant stop (18, 19).

2. A braking mechanism as claimed in Claim 1, characterized in that for at least one stop (18, 19) the tangential plane at the point of contact of the braking roller surface with the stop surface (20, 21) makes an angle which differs from 90° with the tangential plane at the point of contact of the braking roller surface with the circumferential surface of the disc (1).

3. A braking mechanism as claimed in Claim 2, characterized in that for the stop (18) which defines that end position of the braking roller (10) in which the braking lever operates with a longer arm, the tangential plane at the point of contact of the braking roller surface with the stop surface (20) makes an obtuse angle with the tangential plane at the point of contact of the braking roller surface with the circumferential surface of the disc (1).

4. A braking mechanism as claimed in Claim 3, characterized in that the obtuse angle is of the order of magnitude of 120°.

5. A braking device as claimed in Claim 2, characterized in that for the stop (19) which defines the end position of the braking roller (10) in which the braking lever operates with the shorter arm the tangential plane at the point of contact of the braking roller surface with the stop surface (21) makes an acute angle with the tangential plane at the point of contact of the braking roller surface with the circumferential surface of the disc (1).

## Revendications

1. Mécanisme de frein pour un dispositif de bobinage d'un appareil d'enregistrement et/ou de reproduction pour un support d'enregistrement en forme de bande dans lequel peut s'appliquer périphériquement contre un disque (1) relié au dispositif de bobinage un organe de frein présentant une surface de freinage (11), qui, pour exercer des forces de freinage différentes selon le sens de rotation du disque (1), peut se déplacer librement dans un domaine angulaire prédéfini d'une manière correspondant aux deux sens de rotation, le long d'une section courbe (16) concentrique au disque (1) prévue sur un levier de frein pivotant (5), et qui peut être sollicité par une force prédéfinie en vue du freinage, ses deux positions d'extrémité, dans lesquelles des longueurs de bras de levier de frein différentes entrent en jeu, étant fixées chacune par une butée (18, 19) pourvue d'une surface d'arrêt (20, 21), caractérisé en ce que l'organe de frein a la forme d'un galet (10), que les butées (18, 19) sont montées fixes sur l'appareil et que le galet de frein (10) s'applique, dans ses deux positions d'extrémité, par sa surface de freinage (11) contre la surface d'arrêt (20, 21) de la butée en question (18, 19).

2. Mécanisme de frein suivant la revendication 1, caractérisé en ce que, dans le cas d'au moins une butée (18, 19), le plan tangent au point de contact de la surface du galet de frein et de la surface d'arrêt (20, 21) forme avec le plan tangent au point de contact de la surface de galet avec la périphérie du disque (1), un angle différent de 90°.

3. Mécanisme de frein suivant la revendication 2, caractérisé en ce que dans le cas de la butée (18) qui fixe la position d'extrémité du galet de frein (10) dans laquelle la plus grande longueur de bras de levier de frein intervient, le plan tangent au point de contact de la surface du galet de frein et de la surface de butée (20) forme un angle obtus avec le plan tangent au point de contact de la surface du galet de frein avec la périphérie du disque (1).

4. Mécanisme de frein suivant la revendication 3, caractérisé en ce que l'angle obtus choisi est de l'ordre de 120°.

5. Mécanisme de frein suivant la revendication 2, caractérisé en ce que dans le cas de la butée (19) qui détermine la position d'extrémité du galet de frein (10) dans laquelle la longueur de bras de levier de frein plus courte intervient, le plan tangent au point de contact de la surface du galet de frein et de la surface d'arrêt forme un angle aigu avec le plan tangent au point de contact de la surface du galet de frein et de la périphérie du disque (1).

**Fig.1**

Fig.2